# EUROPEAN PATENT APPLICATION

(11) **EP 4 130 573 A1**
(43) Date of publication of application: **08.02.2023**
(21) Application number: 21190096.4
(22) Date of filing: 06.08.2021
(51) Int. Cl.: F23D 14/82, F16K 17/36, F16K 17/22

(54) **EXHAUST NON-RETURN AND SUPPRESSOR VALVE**

(71) Applicant: BDR Thermea Group B.V., 7332 BD Apeldoorn (NL)
(72) Inventor: RUTGERS, Job, 7332 Apeldoorn (NL); KAPUCU, Mehmet, 7332 Apeldoorn (NL)
(74) Representative: Dennemeyer & Associates S.A.

(57) **Abstract**

Valve (1) for a combustion appliance (2), in particular for a gas boiler, comprising a housing (3) having an inlet opening (5), an outlet opening (6) and a valve seat (7) located between the inlet opening (5) and the outlet opening (6), and a valve body (8) movable in the valve seat (7), wherein the valve body (8) is movable in a first position, in which the valve (1) is open based on a gas flow in the housing (3) entering from the inlet opening (5), in a second position, in which the valve (1) is closed based on a condition of absence of gas flow in the housing (3), and in a third position, in which the valve (1) is locked based on a pressure wave in the housing (3) entering from the outlet opening (6), in particular when a flashback occurs in the combustion appliance (2).

## Description

The invention relates to a valve for a combustion appliance. Additionally, the invention relates to a manifold as well as a combustion appliance with such a valve. Also, the invention relates to the use of the valve in a combustion appliance for the combustion of fuel gas having at least more than 20 mol% hydrogen.

Combustion appliances such as gas boilers combust gas fuel to heat water for domestic use and/or central heating systems in buildings. Exhaust flue gas is generated by this combustion. Usually, a central heating water circuit is heated, as well as a hot water supply. A gas leak outside the appliance, both considering the combustible fuel gas or the exhaust flue gas, can be very dangerous. The return of gas flue through the conduits of the combustion appliances can be likewise dangerous. In fact, the flue gas can flow from the burner back to the manifold, thereby determining the conditions for an explosion or for the presence of toxic flue gas due to the presence of CO. For this reason, several safety precautions are needed to be employed in the gas appliances. For example, to avoid return flow of flue gas in the boiler, nowadays combustion appliances are provided with non-return valves.

When in particular hydrogen is used as fuel gas, additional precautions should be taken into account for the safe operation of a combustion appliance. In fact, when hydrogen is added to natural gas (more than 20 mol% of hydrogen), the combustion process changes. The burning velocity increases considerably as well as the heat transfer to the burner. An important issue characterizing the hydrogen boilers is for example the flashback. Damage to the boiler components can result when flashback occurs. Accordingly, dedicated flashback suppressors need to be inserted in the boiler at the port of the burner in order to manage this phenomenon.

It is therefore desirable to obtain an efficient, safe, and relatively low-cost system suitable to be used in hydrogen gas boilers for eliminating both the problems of the return flow of flue gas and of the flashback.

US 20200284473 A1 is directed to a gas heater including a premix burner, a supply channel for supplying a mixture of a gaseous fuel and air to the burner, and a check valve placed in the supply channel upstream of the burner. The check valve includes a moveable valve body having a first end position in which the check valve is opened and a second end position in which the check valve is closed. In a first pressure condition in which a pressure upstream is higher than a pressure downstream, the valve body is urged to the first end position. In a second pressure condition in which the pressure upstream is lower than the pressure downstream the valve body is urged to the second end position. After closure of the check valve the check valve remains closed for a delay time. However, the sealing surface is not designed in such a way that the valve prevents back flow of flue gases.

EP 2 871 393 B1 is directed to a return flow prevention valve having a valve seat and a closing body, wherein the valve seat is provided with an opening that can be closed by the closing body. The closing body has a first rigid plastic part with a first elastic soft seal and/or a second hard plastic part with a second resilient soft seal. However, this valve does not protect components against flashbacks.

EP 1 035 376 A1 is directed to a check valve for use in a gas fired water heater. In particular, the backflow check valve for a condensing heater is positioned between a gas fan and a burner in the form of a plastic injection-molded part movably mounted and produced from deformation-resistant thermoplastic. The valve has a sealing surface part and a counter sealing surface part in one unit and with rough surface structure. However, this valve does not protect components against flashbacks.

Prior art documents disclose devices, systems and methods for preventing either the problem of flashback or the problem of return of flow of flue gases. However, they are not suitable for solving the two problems with one single device.

The object of the invention is therefore to provide a single device, i.e. a valve that is costeffective, safe, and that is effective in cope with risky issues such as the return flow of flue gas and flashback.

The object is solved by a valve for a combustion appliance, in particular for a gas boiler, comprising a housing having an inlet opening, an outlet opening and a valve seat located between the inlet opening and the outlet opening, and a valve body movable in the valve seat, wherein the valve body is movable in a first position, in which the valve is open based on a gas flow in the housing entering from the inlet opening, in a second position, in which the valve is closed based on a condition of absence of gas flow in the housing, and in a third position, in which the valve is locked based on a pressure wave in the housing entering from the outlet opening, in particular when a flashback occurs in the combustion appliance.

It is noted that with the expression gas flow is intended a fuel gas flow and/or an air gas flow. The burner can be a premixed burner.

In this way, the valve is open when the boiler is on operation but is configured to shut when the boiler in not in operation, thereby preventing a return flow of flue gas. In fact, the valve body can move from the first position to the second positon and vice versa, based on the presence or absence of gas flow in the housing entering from the inlet opening, respectively. A gas flow entering the inlet opening of the housing can advantageously be for example a gas flow generated by a fan element located upstream the valve. Therefore, the valve can be in the first position or the second position when the fan element is on or off, respectively. At the same time, the valve can be moved to the third position to suppress flashback or blow back causing a pressure wave from the burner region back to the manifold. Since the valve is advantageously located downstream critical components, such as gas valve and/or fan element, these components can be protected during a flashback. It is noted that when the valve is locked (i.e. it is in the third position), inspection of a service operator is required due to the occurrence of an undesired condition (i.e. flashback).

The housing can be inserted into the manifold, in particular into a cavity of the manifold. Alternatively, the housing can be integrated in the manifold. That means, the housing and the manifold can be a one-piece component.

Accordingly, the present valve combines in a single device the exhaust non-return function and the flashback suppression. Advantageously, the installation space and the production costs are reduced.

In one example, the valve body is made of a deformable material, in particular of a silicon-like material. Advantageously, the valve body can be made of rubber. Thanks to the deformability of the valve body, the valve can be moved to the third position and can be locked. In fact, in the third position the valve body can be pushed against the internal walls of the housing in the valve seat, thereby sealing the housing and a locking force exerted on the valve body in the valve seat is greater than a force exerted on said valve body by the presence of a gas flowing in the housing. In other words, by experiencing a pressure wave coming from the outlet opening of the housing, i.e. by experiencing flashback from the burner region, the valve body is pushed against the internal walls of the housing. The valve body is deformable in such a way that after being pushed further against the walls it gets stuck so that any further movement (upwards or downwards) is prevented. This leads to a permanent sealing of the valve that can only be removed by an operator. In the meantime, damages to critical components, such as the gas valve or the fan element by a flashback condition are prevented.

In another example, in the second position, the valve body can be maintained in contact with internal walls of the housing in the valve seat by gravity, thereby sealing the housing. In other words, the housing and the valve body are configured in such a way that when the gas flow is present in the housing, the valve body is held in position by the flow and the valve is open. On the other hand, when the gas flow is not present in the housing, e.g. when the gas flow is interrupted due to switching off the fan element, the valve body is no more held in position by the flow and falls down by gravity abutting the internal walls of the housing, thereby sealing the housing and closing the valve. It is noted that differently from the situation in the third position, the sealing of the second position is not permanent but rather temporary, meaning that when the gas flow is re-established in the housing, e.g. when the gas flow is generated due to switching on the fan element, the valve body is brought again to the first position and the valve is open.

In particular, the valve body is automatically moved from the first position to the second position upon eliminating the presence of a gas flowing in the housing after a predetermined time, in particular after less than 5 seconds.

In a further example, the housing can have a tapered cross-section. In particular, in the gas flow direction entering the inlet opening of the housing, the distance between internal walls of the housing can increase or, in the direction of the force of gravity, the distance between internal walls of the housing can decrease. This particular configuration of the housing allows the automatic sealing of the valve body by gravity in the second position. It is noted that a particular tapering angle of the housing cross section can be selected based on the shape of the valve body.

In one example, the housing further comprises a blocking structure to maintain the valve body in the first position when a gas flow is present in the housing. The blocking structure can be a flap/cap element or a region of the housing contrasting the push force exerted by the gas flow to the valve body, thereby holding the valve body in a determined position in the housing and/or valve seat, that is preventing the valve body from exiting the outlet opening and/or escaping from the valve.

In an example, the valve body can have a spherical shape. The valve body can be for example a ball element made for instance of rubber. This shape is particularly advantageous for allowing the movement of the valve body among the three positions. In fact, the symmetric shape of the valve body can easily be used to allow a stable and precise movement of the valve body from the first to the second position and vice versa. Also, the combination of the symmetric shape of the valve body, i.e. a spherical shape, with the tapered cross section of the housing as described above allows an easy and secure sealing of the valve in the second position and in the third position.

In another example, the housing comprises arms extending from a bended region of the housing for guiding the valve body through the first, the second and the third positions. The arms can be located around the valve body, i.e. a spherical element, and are used for guiding the valve body into its seat and preventing the valve body from exiting the valve during transport, for example from moving into the manifold. The arms can be arranged at a distance from each other along the circumferential direction. The blocking structure can be arranged at an end of the arms that is opposite to the bended region. In particular, the blocking structure can be a radial extension of the arms towards the centre of the housing.

In an alternative example, the valve body has the shape of a truncated cone. In particular, the valve can comprise a shaft sliding in a through-hole provided in a base region of the housing for guiding the valve body through the first, the second and the third positions. The shaft can have a first end connected to the valve body and a second end connected to a base element that is in contact with the base region of the housing when the valve is in the first position. The base region of the housing can be interpreted as a blocking structure, as mentioned above.

In another aspect of the invention, a manifold for a combustion appliance, in particular for a gas boiler is provided. An inventive valve is arrangeable or arranged in the manifold. In particular, the valve is arrangeable in the manifold when the valve can be inserted into the manifold. Specifically, the valve can be arranged in the manifold such that the inlet opening of the housing can receive a gas flow from an inlet portion of the manifold connectable to a fan element and/or a gas valve and the outlet opening of the housing can release a gas flow to an outlet portion of the manifold connectable to a burner of the combustion appliance.

According to one aspect of the invention, a combustion appliance, in particular a gas boiler, is provided, the combustion appliance comprising an inventive valve or the inventive manifold. Examples of combustion appliances can include furnaces, water heaters, boilers, direct/in-direct make-up air heaters, power/jet burners and any other residential, commercial or industrial combustion appliance.

In particular, the appliance including the present valve or manifold can be a gas boiler for the combustion of hydrogen gas. In this case, it is intended a fuel gas that comprises at least 20 mol% hydrogen.

In another aspect of the invention, the use of the inventive valve or manifold in a combustion appliance using a fuel gas having more than 20 mol % hydrogen is provided. By using the present manifold in a hydrogen gas boiler, it is possible to respect all the safety issues when managing H₂ as fuel gas using a compact and cost effective multipurpose valve.

In the figures, the subject-matter of the invention is schematically shown, wherein identical or similarly acting elements are usually provided with the same reference signs.
- Figures 1A-B: show a schematic representation of a valve and a valve inserted in a manifold of a combustion appliance according to an example.
- Figures 2A-C: show a schematic representation of three positions of a valve according to an example.
- Figure 3: shows a schematic representation of a valve according to an alternative example.

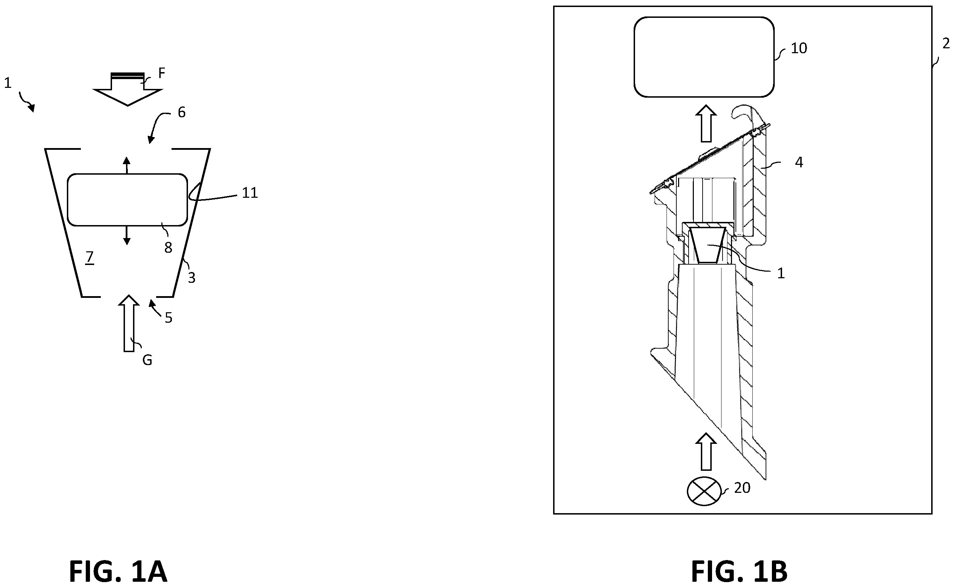

With reference to figure 1A, a valve 1 is shown. The valve 1 comprises a housing 3 with an inlet opening 5 and an outlet opening 6 and a valve seat 7 arranged between the inlet opening 5 and the outlet opening 6. Inside the valve seat 7 a valve body 8 can be moved upwardly or downwardly. Based on the presence or absence of a gas flow G in the housing 3 entering from the inlet opening 5, the valve body is movable between a first position (valve open) and a second position (valve is close), respectively. Also, based on the occurrence of flashback F, i.e. the presence of a pressure wave entering from the outlet opening 6, the valve body 8 can be in a third position (valve locked). Figure 1B illustrates the application of the valve 1 in a manifold 4 of a combustion appliance 2. It is noted that the valve 1 can be inserted inside a manifold 4 arranged between a fan element 20 and a burner 10. The valve 1 works as an exhaust non-return valve for avoiding back flow of flue gas when the appliance 2 is not in operation, for example when the fan element 20 is off. At the same time, the valve 1 works as flashback suppressor to avoid blow back from the burner's region.

According to some specifications, the valve 1 can have a temperature resistance T120 (i.e. the maximum surface temperature of the valve is 120°C) and a durability of 2,500 cycles at 120°C (Celsius) and 500,000 cycles at 60°C. The material of the valve is advantageously resistant to flue gas, is ozone resistant and is not adhesive to dust and oily air.

Also, oscillations/resonances of the valve are prevented to avoid amplification of pressure pulses.

The leak rate, caused by under pressure in the exhaust system, does not cause more leakage than 200 l/h (litre per hour) at a pressure difference (P_{before} ― P_{behind}) of 20Pa (Pascal). The leak rate at a downstream pressure of 100 Pa is lower/equal than 200 l/h (pressure back stream to fan element). The maximum downstream pressure (with closed valve) is 1000 Pa (pressure back stream from fan element).

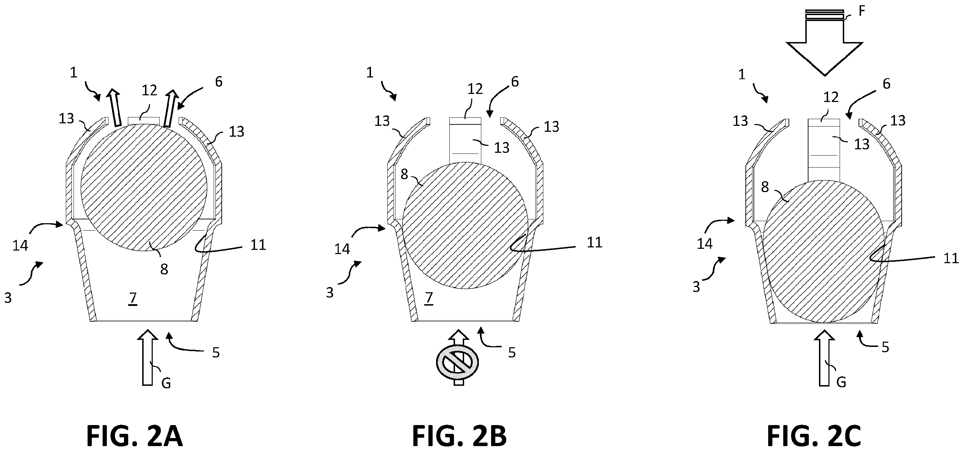

Figures 2A-2C describe in detail the three positions assumed by the valve body 8 in one example. According to this example, the valve body 8 has a spherical shape, i.e. it is a ball made of rubber, and the housing 3 has a tapered bottom portion with a central bended region 14 and a plurality of arms 13 extending upwardly from the bended region 14. The housing 3 and the valve body 8 are configured in such a way that when the gas flow G is present in the housing 3, the valve body 8 is held in position by the gas flow G and the valve 1 is open. This is shown in figure 2A. It is noted that the valve 1 is provided with a blocking structure 12 to maintain the valve body 8 in the first position as long as the gas flow G is present in the housing 3. The blocking structure 12 is advantageously a capping protrusion of one or more arms 13 that opposes the push force exerted by the gas flow G to the valve body 8. In this way, the valve body 8 is held in a determined position in the housing 3, thereby preventing the valve body 8 from exiting the outlet opening 6 and escaping from the valve 1. In this position, the valve 1 is open meaning that the gas flow G enters the inlet opening 5 of the valve 1 and exits the outlet opening 6 of the valve 1 (two arrows on the top of Fig. 2A).

When the gas flow G is not present in the housing 3, e.g. when the gas flow G is interrupted due to switching off the fan element 20, the valve body 8 is no longer held in position by the gas flow G and it falls down by gravity abutting the internal walls 11 of the housing 3. Accordingly, the valve body 8 seals the housing 3 and closes the valve 1. This is shown in figure 2B. In this position, the valve 1 acts as a non-return valve so that any possible flue gas coming for example from the burner's region and entering the outlet opening 6 is prevented from flowing beyond the valve body 8. Therefore any component located beyond the valve body 8, i.e. a gas valve or a fan element, is protected from the return flue gas. It is noted that the tapered shape of the housing 3 as well as the spherical shape of the valve body 8 allow an easy and automatic movement of the valve body 8 into the closed position as a consequence of the only application of the force of gravity.

When a pressure wave F is coming from the outlet opening 6 of the housing 3, i.e. by experiencing flashback from the burner's region, the valve body 8 is pushed against the internal walls 11 of the housing 3. The valve body 8 is deformable in such a way that after being pushed further against the walls 11 it gets stuck so that any further movement (upwards or downwards) is prevented. This means that the locking force exerted on the valve body 8 in the valve seat 7 is greater than a force exerted on the valve body 8 by the presence of a gas flowing G in the housing 3. This is shown in figure 2C.

It is noted that the arms 13 extending upwardly from the bended region 14 of the housing 3 serve for guiding the valve body 8 through all three positions.

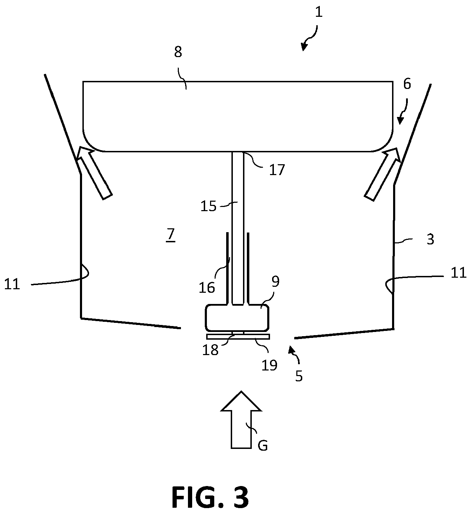

Figure 3 illustrates a valve 1 according to an alternative example. In this example, the valve body has the shape of a truncated cone. The valve body 8 is made of a flexible material, i.e. rubber or silicon-like material. The shape of the housing (with tapered cross section) and the shape, as well as the material, of the valve body 8 allow that the valve body 8 according to this example can be moved in the three positons as mentioned above. Also, the valve 1 comprises a shaft 15 sliding in a through-hole 16 provided in a base region 9 of the of the housing 3 for guiding the valve body 8 through the first, the second and the third positions. The shaft 15 has a first end 17 connected to the valve body 8 and a second end 18 connected to a base element 19 that is in contact with the base region 9 of the housing 3, when the valve 1 is in the open position. The valve 1 works as an exhaust non-return valve for avoiding back flow of flue gas when the appliance 2 is not in operation, for example when the fan element 20 is off. At the same time, the valve 1 works as flashback suppressor to avoid blow back from the burner's region.

When the gas flow G is present and enters the inlet opening 5, the valve body 8 is pushed upwards and the gas flow can exits the outlet opening 6 of the housing 3, as shown in figure 3. In this position, the combination of the base region 9 of the housing 3 and the base element 19 of the shaft 15 opposes the push force exerted by the gas flow G and the valve body 8 is held in position. When the gas flow G is not present, the valve body 8 moves down to the valve seat 7 by gravity and seals the housing 3. It is noted that passing from the open to the closed position, the shaft 15 slides in the through hole 16 till the valve body 8 completely fits the valve seat 7 and it is in contact with the internal walls 11 of the housing 3. When flashback occurs, the slightly conical shape of the valve body 8 allows a locking of the valve body 8 in the valve seat 7 by pushing the valve body 8 to the internal walls 11 of the housing, the valve body 8 being deformed by the pressure wave exerted by flashback and being stuck in the valve seat 7.

### Reference Signs

- 1.: Valve
- 2.: Combustion appliance
- 3.: Housing
- 4.: Manifold
- 5.: Inlet opening
- 6.: Outlet opening
- 7.: Valve seat
- 8.: Valve body
- 9.: Base region
- 10.: Burner
- 11.: Internal walls
- 12.: Blocking structure
- 13.: Arms
- 14.: Bended region
- 15.: Shaft
- 16.: Through-hole
- 17.: First end
- 18.: Second end
- 19.: Base element
- 20.: Fan element

## Claims

1. Valve (1) for a combustion appliance (2), in particular for a gas boiler, comprising:
a housing (3) having an inlet opening (5), an outlet opening (6) and a valve seat (7) located between the inlet opening (5) and the outlet opening (6), and
a valve body (8) movable in the valve seat (7);
wherein the valve body (8) is movable in a first position, in which the valve (1) is open based on a gas flow in the housing (3) entering from the inlet opening (5), in a second position, in which the valve (1) is closed based on a condition of absence of gas flow in the housing (3), and in a third position, in which the valve (1) is locked based on a pressure wave in the housing (3) entering from the outlet opening (6), in particular when a flashback occurs in the combustion appliance (2).

2. Valve (1) according to claim 1, **characterized in that** the valve body (1) is made of a deformable material, in particular of a silicon-like material.

3. Valve (1) according to any one of claims 1 to 2, **characterized in that** in the second position the valve body (8) is maintained in contact with internal walls (11) of the housing (3) in the valve seat (7) by gravity, thereby sealing the housing (3).

4. Valve (1) according to any one of claims 1 to 3, **characterized in that** the valve body (8) is automatically moved from the first position to the second position upon eliminating the presence of a gas flowing in the housing (3) after a predetermined time, in particular after less than 5 seconds.

5. Valve (1) according to any one of claims 1 to 4, **characterized in that** in the third position the valve body (8) is pushed against the internal walls (11) of the housing (3) in the valve seat (7), thereby sealing the housing (3) and/or a locking force exerted on the valve body (8) in the valve seat (7) is greater than a force exerted on said valve body (8) by the presence of a gas flowing in the housing (3).

6. Valve (1) according to any one of claims 1 to 5, **characterized in that** the housing (3) has a tapered cross-section.

7. Valve (1) according to any one of claims 1 to 6, **characterized in that** the housing (3) further comprises a blocking structure (12) to maintain the valve body (8) in the first position when a gas flow is present in the housing (3).

8. Valve (1) according to any one of claims 1 to 7, **characterized in that** the valve body (8) has a spherical shape.

9. Valve (1) according to claim 8, **characterized in that** the housing (3) comprises arms (13) extending from, in particular a bended, region (14) of the housing (3) for guiding the valve body (8) through the first, the second and the third positions.

10. Valve (1) according to any one of claims 1 to 7, **characterized in that** the valve body (8) has the shape of a truncated cone.

11. Valve (1) according to claim 10, **characterized in that** the valve (1) comprises a shaft (15) sliding in a through-hole (16) provided in a base region (9) of the housing (3) for guiding the valve body (8) through the first, the second and the third positions, wherein in particular the shaft (15) has a first end (17) connected to the valve body (8) and a second end (18) connected to a base element (19) that is in contact with the base region (9) of the housing (3) when the valve (1) is in the first position.

12. Manifold (4) for a combustion appliance (2), in particular for a gas boiler, **characterized in that** a valve according to any one of claims 1 to 12 is arrangeable or arranged in the manifold (4).

13. Combustion appliance (2), in particular a gas boiler, comprising a valve (1) according to any one of claims 1 to 12 or a manifold (4) according to claim 13.

14. Use of a valve (1) according to anyone of claims 1 to 12 or of a manifold (4) according to claim 13 in a combustion appliance (2) using a fuel gas having at least more than 20 mol% hydrogen.
